# EUROPEAN PATENT APPLICATION

(11) **EP 4 224 207 A1**
(43) Date of publication of application: **09.08.2023**
(21) Application number: 22211898.6
(22) Date of filing: 07.12.2022
(51) Int. Cl.: G01S 7/487, G01S 17/88, G01S 17/46

(54) **DISTANCE MEASURING DEVICE, AUTOMATIC DOOR SYSTEM, OPENING-CLOSING SYSTEM, AND DISTANCE MEASUREMENT METHOD**

(30) Priority: 03.02.2022 JP 2022015898; 25.10.2022 JP 2022170949
(71) Applicant: Optex Co., Ltd., Shiga 520-0101 (JP)
(72) Inventor: OHBA, Hiroyuki, Japan, 5200101 (JP); HIRAI, Kazuhiko, Japan, 5200101 (JP)
(74) Representative: Patentanwaltskanzlei WILHELM & BECK

(57) **Abstract**

A detecting device (30) includes: a light-emitting element (31); and an image sensor (33). The image sensor (33) includes a position output section configured to, in a case where an amount of light received of a light-receiving element (33Aa) is greater than a threshold value, output a position in the image sensor (33). The detecting device (30) further includes: a position determining section (34B) configured to determine whether the position is located on a reflection trajectory, the reflection trajectory being a line connecting, on the image sensor (33), points at which a reflected beam reflected by a physical object forms an image on the image sensor (33) and which are obtained as a distance from the physical object is changed; and a distance deriving section (34C) configured to derive, with use of the relationship between the position and the distance from the physical object, a distance to a physical object.

## Description

### Technical Field

The present disclosure relates to a distance measuring device, etc. for measuring a distance from a physical object.

### Background Art

Distance measuring devices are widely used for measuring a distance from a physical object. In some cases, such distance measuring devices are required to measure a distance in as short a time as possible. In order for such a problem to be solved, Patent Literature 1 and Patent Literature 2 disclose techniques for reducing the amount of processing (the amount of computation) needed for distance measurement.

### Citation List

### [Patent Literature]

### [Patent Literature 1]

Japanese Translation of PCT International Application, Tokuhyo, No. 2021-518535

### [Patent Literature 2]

Japanese Translation of PCT International Application, Tokuhyo, No. 2021-522730

### Summary of Invention

### Technical Problem

However, the techniques of Patent Literature 1 and Patent Literature 2 are susceptible of further improvement.

An object of an aspect of the present disclosure is to provide a distance measuring device and a distance measurement method that enable a reduction in the amount of processing needed for distance measurement.

### Solution to Problem

In order for the above problem to be solved, a distance measuring device in accordance with an aspect of the present disclosure includes: at least one light-emitting element; and an image sensor including a plurality of pixel sections each of which includes a light-receiving element and which are two-dimensionally disposed, the image sensor including a position output section configured to, in a case where an amount of light received is greater than a first threshold value in the light-receiving element included in a pixel section of the plurality of pixel sections, output a position of the pixel section in the image sensor, the distance measuring device further including: a position determining section configured to determine whether the position is located on a reflection trajectory, the reflection trajectory being a line connecting, on the image sensor, points at which a reflected beam, reflected by a physical object, of an irradiation beam from the at least one light-emitting element forms an image on the image sensor and which are obtained as a distance from the physical object is changed; and a distance deriving section configured to, in a case where the position is located on the reflection trajectory, derive, with use of a relationship between the position and the distance from the physical object, a distance to a physical object.

In order for the above problem to be solved, a distance measurement method in accordance with an aspect of the present disclosure is a distance measurement method for measuring a distance to a measurement target, the distance measurement method being to be performed in a distance measuring device that includes a light-emitting element and an image sensor including a plurality of pixel sections each of which includes a light-receiving element and which are two-dimensionally disposed, the distance measurement method including the steps of: in a case where an amount of light received is greater than a first threshold value in the light-receiving element included in a pixel section of the plurality of pixel sections, outputting a position of the pixel section in the image sensor; determining whether the position is located on a reflection trajectory, the reflection trajectory being a line connecting, on the image sensor, points at which a reflected beam, reflected by a physical object, of an irradiation beam from the light-emitting element forms an image on the image sensor and which are obtained as a distance from the physical object is changed; and in a case where the position is located on the reflection trajectory, deriving, with use of a relationship between the position and the distance from the physical object, a distance to a physical object.

### Advantageous Effects of Invention

An aspect of the present disclosure enables a reduction in the amount of processing needed for distance measurement.

### Brief Description of Drawings

Fig. 1 is a block diagram of a main configuration of an automatic door system in accordance with Embodiment 1 of the present disclosure.
Fig. 2 is an external view of the automatic door system.
Fig. 3 is a front view of an image sensor included in the automatic door system.
Fig. 4 is an explanatory diagram on an example of event generation performed by an event generating section included in the image sensor.
Fig. 5 is an explanatory diagram on a reflection trajectory in accordance with Embodiment 1 of the present disclosure.
Fig. 6 is a flowchart of an example of the process of a distance measurement method, in accordance with Embodiment 1 of the present disclosure, for measuring a distance to a measurement target.
Fig. 7 is a flowchart of another example of the process of the distance measurement method, in accordance with Embodiment 1 of the present disclosure, for measuring a distance to a measurement target.
Fig. 8 is a block diagram of a main configuration of a shutter opening-closing system in accordance with Embodiment 2 of the present disclosure.
Fig. 9 is a diagram of an example of a light-emission pattern of irradiation beams with which a detecting region D is irradiated.
Fig. 10 is a diagram of a light-emission pattern, seen when a detecting device and the detecting region are viewed from above the automatic door system, causing reflection trajectories to overlap each other.
Fig. 11 is a diagram of the reflection trajectories of respective irradiation beams applied in the light-emission pattern illustrated in Fig. 10.
Fig. 12 is a diagram of a light-emission pattern, seen when the detecting device and the detecting region are viewed from above the automatic door system, not causing reflection trajectories to overlap each other.
Fig. 13 is a diagram of the reflection trajectories of respective irradiation beams applied in the light-emission pattern illustrated in Fig. 12.

### Description of Embodiments

### Embodiment 1

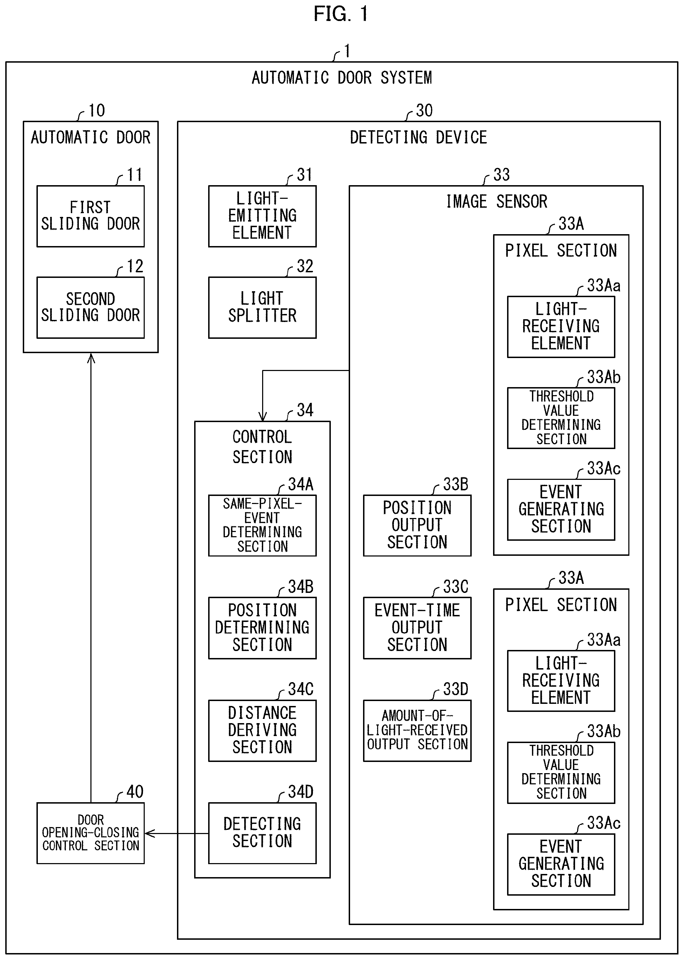

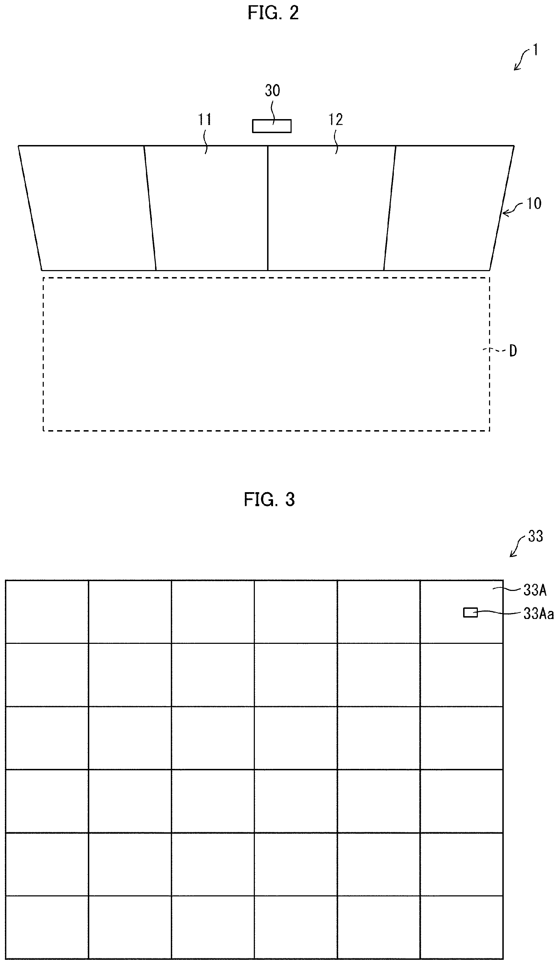

The following description will discuss Embodiment 1 of the present disclosure in detail. Fig. 1 is a block diagram of a main configuration of an automatic door system 1 of Embodiment 1. Fig. 2 is an external view of the automatic door system 1. Fig. 2 is a view of an automatic door 10 as viewed from outside. This view illustrates a first sliding door 11 and a second sliding door 12 (described below) of the automatic door 10 that are in a closed position.

In the following description, a situation where a detecting device 30 is included in the automatic door system 1 is taken as an example. However, the detecting device 30 is not limited to such a use. The distance measuring function of the detecting device 30 can be used not only in the automatic door system 1 but also in a system in which distance measurement is required.

As illustrated in Figs. 1 and 2, the automatic door system 1 includes: an automatic door 10; the detecting device 30; and a door opening-closing control section 40.

The automatic door 10 includes: the first sliding door 11; and the second sliding door 12. The opening-closing motion of the first sliding door 11 and the second sliding door 12 is controlled by the door opening-closing control section 40 (described below).

The detecting device 30 includes: at least one light-emitting element 31; a light splitter 32; an image sensor 33; and a control section 34.

The light-emitting element 31 applies light (as an irradiation beam) to a detecting region of the detecting device 30. The light-emitting element 31 applies light in the manner of pulse irradiation for a predetermined time.

The light splitter 32 splits light applied by the light-emitting element 31 into a plurality of rays of light (irradiation beams). Splitting, via the light splitter 32, the light applied by the light-emitting element 31 causes the formation of a light-emission pattern of the irradiation beams applied by the detecting device 30. The light-emission pattern will be described later in detail. The light applied by the light-emitting element 31 can be split via the light splitter 32 into a plurality of irradiation beams. Accordingly, it is possible to generate a plurality of irradiation beams with use of a single light-emitting element 31. This makes it possible to extend the detecting region of the detecting device 30.

The image sensor 33 is a sensor on which images are formed by reflected beams, reflected by a physical object, of the irradiation beams applied by the light-emitting element 31. Fig. 3 is a front view of the image sensor 33. As illustrated in Fig. 3, the image sensor 33 includes a plurality of pixel sections 33A that are two-dimensionally disposed. Each of the pixel sections 33A includes a light-receiving element 33Aa. Accordingly, a plurality of light-receiving elements 33Aa are two-dimensionally disposed in the image sensor 33. The plurality of light-receiving elements 33Aa receive the reflected beams, reflected by a physical object, of the irradiation beams applied by the light-emitting element 31. The reflected beams form images on the image sensor 33. The plurality of light-receiving elements 33Aa are optically separated from each other. In addition, the respective operations of the plurality of light-receiving elements 33Aa are temporally separated from each other.

As illustrated in Fig. 1, each of the plurality of pixel sections 33A includes a threshold value determining section 33Ab and an event generating section 33Ac. For simplicity, only two pixel sections 33A are illustrated in Fig. 1.

The threshold value determining section 33Ab determines whether the amount of light received in the corresponding light-receiving element 33Aa is greater than a predetermined threshold value (hereinafter, a first threshold value). The threshold value determining section 33Ab also determines whether the amount of light received in the corresponding light-receiving element 33Aa is smaller than a predetermined threshold value (hereinafter, a second threshold value).

The event generating section 33Ac generates an event in a case where the threshold value determining section 33Ab determines that the amount of light received in the corresponding light-receiving element 33Aa is greater than the first threshold value and in a case where the threshold value determining section 33Ab determines that the amount of light received in the corresponding light-receiving element 33Aa is smaller than the second threshold value. Hereinafter, an event generated due to the amount of light received in the light-receiving element 33Aa being greater than the first threshold value can be referred to as a positive event, and an event generated due to the amount of light received in the light-receiving element 33Aa being smaller than the second threshold value can be referred to as a negative event.

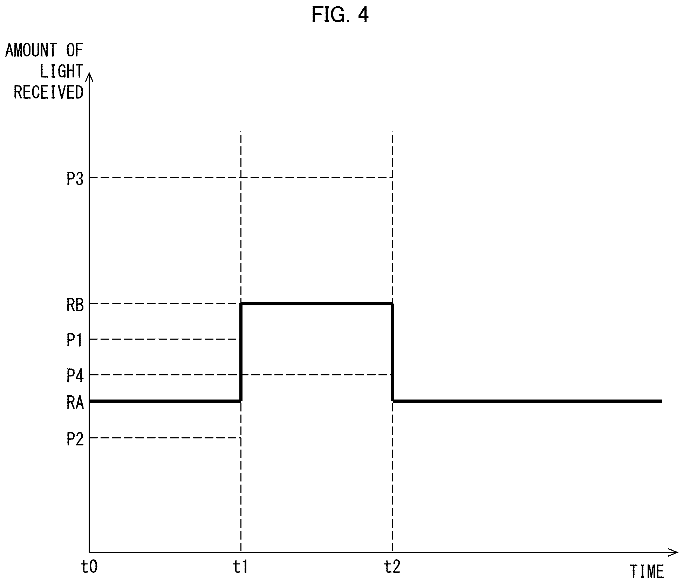

Fig. 4 is an explanatory diagram on an example of event generation performed by the event generating section 33Ac. As an example, assume that, in a certain light-receiving element 33Aa, a reflected beam does not form an image from a time t0 to a time t1 and forms an image from the time t1 to a time t2, as illustrated in Fig. 4. Although the reflected beam does not form an image in the certain light-receiving element 33Aa from the time t0 to the time t1, this light-receiving element 33Aa receives ambient light (e.g., sunlight). Therefore, a predetermined amount of light (herein, the amount of light received RA) forms an image.

In that case, the threshold value determining section 33Ab sets the first threshold value from the time t0 to the time t1 (hereinafter, a first threshold value P1) to a value in proportion to the amount of light received RA. Specifically, the threshold value determining section 33Ab sets the first threshold value P1 to a value obtained by adding, to the amount of light received RA, a first proportion (e.g., 20%) of the amount of light received RA, so that the set first threshold value P1 is greater than a reference amount of light received which is the amount of light received RA.

Further, the threshold value determining section 33Ab sets the second threshold value from the time t0 to the time t1 (hereinafter, a second threshold value P2) to a value in proportion to the amount of light received RA. Specifically, the threshold value determining section 33Ab sets the second threshold value P2 to a value obtained by subtracting, from the amount of light received RA, a second proportion (e.g., 10%) of the amount of light received RA, so that the set second threshold value P2 is smaller than a reference amount of light received which is the amount of light received RA.

The threshold value determining section 33Ab performs the settings such that the absolute value of the first proportion used for the setting of the first threshold value is greater than the absolute value of the second proportion used for the setting of the second threshold value. In the above example of the first threshold value P1 and the second threshold value P2, the absolute value of the first proportion is 20 and the absolute value of the second proportion is 10. Accordingly, the above setting condition is met.

The event generating section 33Ac generates a positive event at the time when the threshold value determining section 33Ab determines that, as a result of image formation of the reflected beam, the amount of light received in the certain light-receiving element 33Aa becomes an amount of light received RB that is greater than the first threshold value P1, i.e., at the time t1.

The threshold value determining section 33Ab updates the first threshold value and the second threshold value when an event is generated. In the example illustrated in Fig. 4, the threshold value determining section 33Ab updates the first threshold value and the second threshold value at the time t1, when the positive event is generated. The threshold value determining section 33Ab sets the first threshold value used at or after the time t1 (hereinafter, a first threshold value P3) to a value in proportion to the amount of light received RB, which is an amount of light received after the positive event. Specifically, the threshold value determining section 33Ab sets the first threshold value P3 to a value obtained by adding, to the amount of light received RB, the first proportion of the amount of light received RB, so that the set first threshold value P3 is greater than a reference amount of light received which is the amount of light received RB.

The threshold value determining section 33Ab sets the second threshold value used at and after the time t1 (hereinafter, a second threshold value P4) to a value in proportion to the amount of light received RB. Specifically, the threshold value determining section 33Ab sets the second threshold value P4 to a value obtained by subtracting, from the amount of light received RB, the second proportion of the amount of light received RB, so that the second threshold value P4 is smaller than a reference amount of light received which is the amount of light received RB, which is the amount of light received after the positive event.

The event generating section 33Ac generates a negative event at the time when a reflected beam no longer forms an image and the threshold value determining section 33Ab determines that the amount of light received in the certain light-receiving element 33Aa becomes the amount of light received RA that is smaller than the second threshold value P4, i.e., at the time t2.

As described above, the first threshold value and the second threshold value are set such that the absolute value of the first proportion used for the setting of the first threshold value is greater than the absolute value of the second proportion used for the setting of the second threshold value. Accordingly, the amount of light received RA is smaller than the second threshold value P4 at the time t2, when a reflected beam no longer forms an image and the amount of light received in the certain light-receiving element 33Aa becomes the amount of light received RA corresponding to a period from the time t0 to the time t1. This enables the event generating section 33Ac to generate a negative event.

The event generating section 33Ac generates an event in a manner that makes it possible to distinguish between an event generated due to the amount of light received being greater than the first threshold value (i.e., positive event) and an event generated due to the amount of light received being smaller than the second threshold value (i.e., negative event).

The image sensor 33 further includes: a position output section 33B; an event-time output section 33C (a time output section); and an amount-of-light-received output section 33D.

For each of the plurality of light-receiving elements 33Aa, in a case where an amount of light received is greater than the first threshold value in the light-receiving element 33Aa, the position output section 33B outputs the position, in the image sensor 33, of the pixel section 33A including the light-receiving element 33Aa concerned. Specifically, the position output section 33B outputs, to the control section 34, the position, in the image sensor 33, of the pixel section 33A in which the event generating section 33Ac has generated an event. The position output section 33B outputs the position in the image sensor 33 expressed as two-dimensional coordinates.

The event-time output section 33C outputs, to the control section 34, a time at which the event generating section 33Ac generated an event. The output from the event-time output section 33C enables the control section 34 to recognize the time at which the event was generated.

The amount-of-light-received output section 33D outputs, to the control section 34, information indicating the amount of light received, at the time when the event generating section 33Ac generated an event, of the light-receiving element 33Aa of the pixel sections 33A in which the event was generated. With the output from the amount-of-light-received output section 33D, it is possible to recognize brightness at the time when the event is generated.

The control section 34 controls each of the sections of the detecting device 30. The control section 34 includes: a same-pixel-event determining section 34A; a position determining section 34B; a distance deriving section 34C; and a detecting section 34D.

In a case where the event generating section 33Ac generates a plurality of events, the same-pixel-event determining section 34A determines whether a positive event is generated before a negative event is generated in the same light-receiving element 33Aa within a predetermined time. In other words, the same-pixel-event determining section 34A determines whether an amount of light received is greater than the first threshold value before being smaller than the second threshold value in the same light-receiving element 33Aa within a predetermined time. The predetermined time described above may be, for example, a pulse irradiation time during which the light-emitting element 31 applies an irradiation beam. This makes it possible to identify, as the pixel section 33A on which a reflected beam forms an image, the pixel section 33A that is determined, by the same-pixel-event determining section 34A, to be the same pixel section 33A in which a positive event was generated before a negative event was generated within the pulse irradiation time.

The same-pixel-event determining section 34A outputs, to the position determining section 34B, information on the position of the pixel section 33A that has been determined to be the pixel section in which a positive event was generated before a negative event was generated.

The position determining section 34B determines whether the position, outputted by the position output section 33B, of the pixel section 33A in which the event generating section 33Ac has generated an event is located on a reflection trajectory (described below).

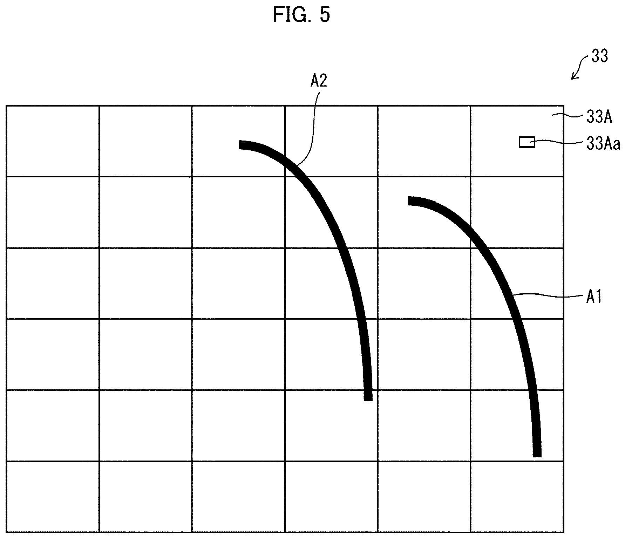

Fig. 5 is an explanatory diagram on the reflection trajectory described above. As illustrated in Fig. 5, the image sensor 33 stores in advance, for each of the irradiation beams into which light emitted by the light-emitting element 31 is split by the light splitter 32, a reflection trajectory that is a line connecting, on the image sensor 33, points at which a reflected beam, reflected by a physical object, of the corresponding irradiation beam forms an image on the image sensor 33 and which are obtained as the distance from the physical object is changed. Illustrated in Fig. 5 are a reflection trajectory A1 and a reflection trajectory A2 of respective two irradiation beams of the plurality of irradiation beams.

In a case where irradiation regions toward which the plurality of irradiation beams are simultaneously emitted from the light-emitting element 31 are close to each other, the reflection trajectories of the plurality of irradiation beams can overlap each other. In that case, it is impossible to determine which irradiation beam corresponds to the reflection trajectory of interest, and therefore impossible to calculate the distance accurately.

To address this, according to an aspect of the present disclosure, it is preferable to form, by adjusting light applied by the light-emitting element 31, the light-emission direction of the at least one light-emitting element 31 such that the reflection trajectories of the plurality of simultaneously applied irradiation beams do not overlap each other. For example, in a case where a plurality of irradiation beams are intended to be simultaneously applied to the irradiation regions that are close to each other in a first direction (e.g., horizontal direction), applying the plurality of irradiation beams to regions that are separated from each other by a predetermined distance in a direction (e.g., vertical direction) different from the first direction can prevent the reflection trajectories of the plurality of irradiation beams from overlapping each other. This makes it possible to identify on which reflection trajectory corresponding to an irradiation beam the pixel section 33A in which an event has been generated is located, and therefore improve the accuracy of the measurement. Note that in a case where a plurality of irradiation beams are applied at different timings, the reflection trajectories of the plurality of irradiation beams may overlap each other.

Furthermore, according to an aspect of the present disclosure, the light-emission direction of the at least one light-emitting element 31 may be formed by adjusting light applied by the light-emitting element 31 such that the reflection trajectory of any one of the irradiation beams does not overlap the reflection trajectory of any other irradiation beam. In other words, light applied by the light-emitting element 31 may be adjusted such that all of the reflection trajectories of the plurality of irradiation beams do not overlap each other. This makes it possible to prevent the reflection trajectories of a plurality of irradiation beams from overlapping each other even when the plurality of irradiation beams are simultaneously applied, and therefore makes it possible to improve the accuracy of the measurement.

The position determining section 34B determines whether the position of the pixel section 33A in which the event generating section 33Ac has generated an event is located on any of the plurality of reflection trajectories, as described above. When the position of the pixel section 33A is located on any of the plurality of reflection trajectories, the position determining section 34B outputs the position to the distance deriving section 34C.

According to an aspect of the present disclosure, the position determining section 34B may determine, in relation only to the pixel section 33A in which the same-pixel-event determining section 34A has determined that a positive event was generated before a negative event was generated, whether the pixel section 33A concerned is located on any of the plurality of reflection trajectories. In this respect, as to the light-receiving element 33Aa in which an amount of light received is greater than the first threshold value due to irradiation with an irradiation beam, the amount of light received is supposed to be smaller than the second threshold value after the irradiation with the irradiation beam is ended. With this configuration, it is possible to determine whether the light-receiving element 33Aa in which the amount of light received is greater than the first threshold value is the same as the light-receiving element 33Aa in which the amount of light received is smaller than the second threshold value thereafter. This makes it possible to confirm that the amount of light received of the light-receiving element 33Aa concerned was greater than the first threshold value due to irradiation with an irradiation beam and makes it possible to accurately recognize the position of the pixel section 33A in which an event has been generated due to the irradiation with the irradiation beam. It is also possible to reduce the amount of processing because processing is performed only when an event is generated due to stop of irradiation with the irradiation beam.

The distance deriving section 34C uses the position, outputted by the position determining section 34B, of the pixel section 33A that is located on any of the reflection trajectories, to derive a distance to a measurement target. As described earlier, the reflection trajectory is a line connecting points at which a reflected beam forms an image on the image sensor 33 and which are obtained as the distance from the physical object is changed. For each of the pixel sections 33A that are located on the reflection trajectory, the distance deriving section 34C stores, in advance, a distance from the image sensor 33 to the physical object with the distance being associated with the corresponding pixel section 33A. Note that, instead of the distance from the image sensor 33 to the physical object, a distance from the automatic door system 1, which is equipped with the detecting device 30 including the image sensor 33, to the physical object may be stored in advance with the distance being associated with the position of the corresponding pixel section 33A.

Upon reception of the position of the pixel section 33A from the position determining section 34B, the distance deriving section 34C reads the distance, associated with the position, from the image sensor 33 to the physical object, to derive a distance from the image sensor 33 to the measurement target. That is to say, when the position of the pixel section 33A that is outputted by the position determining section 34B is located on that reflection trajectory, the distance deriving section 34C derives a distance from the image sensor 33 to the measurement target with use of the relationship between the position of this pixel section 33A and the distance to the physical object. The distance deriving section 34C outputs the derived distance from the image sensor 33 to the measurement target to the detecting section 34D.

The detecting section 34D uses the distance, outputted from the distance deriving section 34C, from the image sensor 33 to the measurement target, to detect a passerby. In other words, the detecting section 34D uses the distance, outputted by the distance deriving section 34C, from the image sensor 33 to the measurement target, to determine the presence or absence of detection of a passerby. For example, when the distance from the image sensor 33 to the measurement target is shorter than a predetermined distance, the detecting section 34D may determine that a passerby is detected. The detecting section 34D outputs the result of detection of a passerby to the door opening-closing control section 40.

The door opening-closing control section 40 controls the opening-closing motion of the automatic door 10 according to the result of the detection of the passerby detected by the detecting section 34D and present near the automatic door 10. For example, when receiving, from the detecting section 34D, the result of detection indicating that a passerby is present near the automatic door 10, the door opening-closing control section 40 may cause the automatic door 10 to make an opening motion.

As described above, in the automatic door system 1 in accordance with Embodiment 1, the light-emitting element 31, the light splitter 32, the image sensor 33, the same-pixel-event determining section 34A, the position determining section 34B, and the distance deriving section 34C function as a distance measuring device. The automatic door system 1 further includes the detecting section 34D that uses the distance measured by the distance measuring device to detect a passerby. That is to say, the detecting device 30 functions as a distance measuring device that measures a distance from the image sensor 33 to a measurement target and as a detecting device that detects a passerby. The automatic door system 1 further includes the door opening-closing control section 40 that control the opening-closing motion of the automatic door 10 according to the result of detection of a passerby detected by the detecting section 34D. In other words, in the automatic door system 1, the automatic door 10 is opened and closed according to the result of detection of a passerby determined with use of the distance measured by the distance measuring device.

The following description will discuss a distance measurement method, performed by the detecting device 30, for measuring a distance to a measurement target. As the distance measurement method, described below are a distance measurement method in which only a positive event is used and a distance measurement method in which both a positive event and a negative event are used.

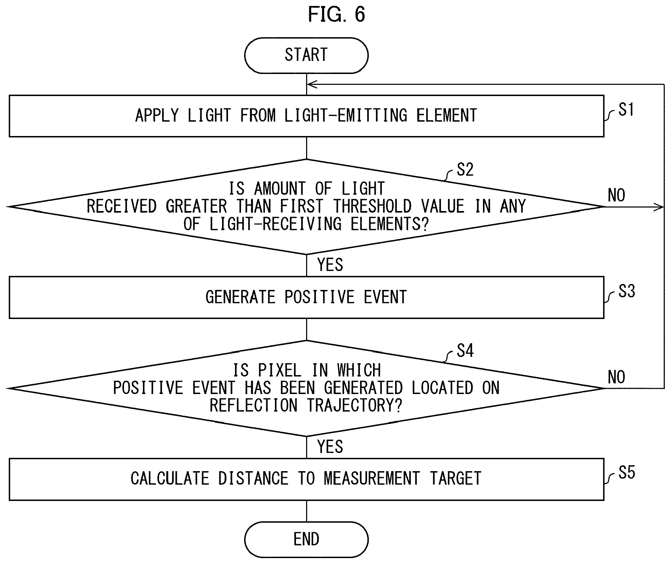

Fig. 6 is a flowchart of an example of a process of a distance measurement method in which only a positive event is used. In the distance measurement method in which only a positive event is used, firstly, the light-emitting element 31 is instructed by the control section 34 to apply light (step S1, irradiation step), as illustrated in Fig. 6. The light applied by the light-emitting element 31 is split into a plurality of irradiation beams by the light splitter 32 and is applied to a detecting region D in a predetermined light-emission pattern.

Next, in each of the pixel sections 33A, the threshold value determining section 33Ab determines whether an amount of light received of the light-receiving element 33Aa is greater than the first threshold value (step S2). In a case where the amount of light received is not greater than the first threshold value ("NO" in step S2), the process returns to step S1.

Otherwise, in a case where the amount of light received is greater than the first threshold value ("YES" in step S2), the event generating section 33Ac generates a positive event in the pixel section 33A that includes the light-receiving element 33Aa concerned (step S3, event generation step). When the event generating section 33Ac generates the positive event, the position output section 33B outputs, to the position determining section 34B, the position of the pixel section 33A in which the positive event has been generated.

Next, the position determining section 34B determines whether the position, outputted by the position output section 33B, of the pixel section 33A, i.e., the position of the pixel section 33A in which the event generating section 33Ac has generated a positive event, is on any of a plurality of reflection trajectories (step S4, position determination step).

In a case where the position of the pixel section 33A in which the event generating section 33Ac has generated the event is not located on any of the plurality of reflection trajectories ("NO" in step S4), the process returns to step S1.

Otherwise, in a case where the position of the pixel section 33A in which the event generating section 33Ac has generated the event is located on any of the plurality of reflection trajectories ("YES" in step S4), the distance deriving section 34C uses the position, outputted by the position determining section 34B, of the pixel section 33A located on any one reflection trajectory, to derive a distance to the measurement target (step S5, distance derivation step).

As described above, in the detecting device 30 in accordance with Embodiment 1, the distance derivation processing is performed only on the pixel section 33A in which the event generating section 33Ac has generated an event. This makes it possible to reduce the amount of processing for distance derivation, in comparison with the conventional techniques in which the distance derivation processing is performed on all pixels.

Further in the detecting device 30, whether the position of a pixel section 33A in which the event has been generated is located on a reflection trajectory is determined, and the distance derivation processing is performed only in a case where the position of such a pixel section 33A is located on the reflection trajectory. This eliminates the need to scan the entire image sensor 33 and therefore makes it possible to further reduce the amount of processing for distance derivation.

Further in the detecting device 30, the distance deriving section 34C reads a distance from the image sensor 33 to the physical object, the distance being stored in advance and associated with the position of the pixel section 33A, and thereby derives the distance from the image sensor 33 to the measurement target. This makes it possible to further reduce the amount of processing for distance derivation.

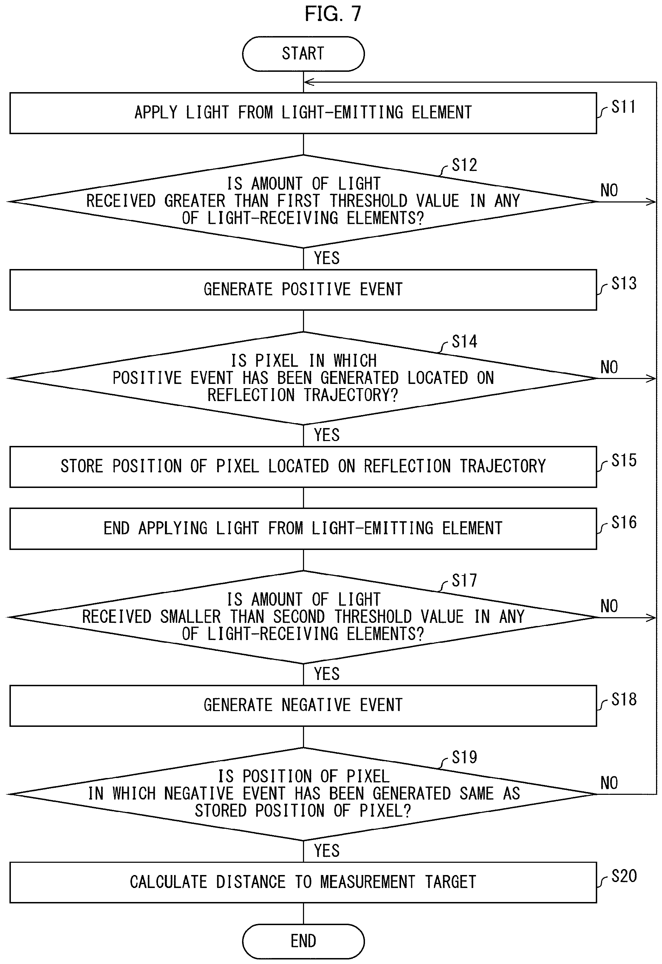

Fig. 7 is a flowchart of an example of a process of a distance measurement method in which both a positive event and a negative event are used. In the distance measurement method in which both a positive event and a negative event are used, firstly, the light-emitting element 31 is instructed by the control section 34 to apply light (step S11, irradiation step), as illustrated in Fig. 7. The light applied by the light-emitting element 31 is split into a plurality of irradiation beams by the light splitter 32 and is applied to the detecting region D in a predetermined light-emission pattern.

Next, in each of the pixel sections 33A, the threshold value determining section 33Ab determines whether an amount of light received of the light-receiving element 33Aa is greater than the first threshold value (step S12). In a case where the amount of light received is not greater than the first threshold value ("NO" in step S12), the process returns to step S11.

Otherwise, in a case where the amount of light received is greater than the first threshold value ("YES" in step S12), the event generating section 33Ac generates a positive event in the pixel section 33A that includes the light-receiving element 33Aa concerned (step S13, event generation step). When the event generating section 33Ac generates the positive event, the position output section 33B outputs, to the control section 34, the position of the pixel section 33A in which the positive event has been generated.

Next, the position determining section 34B determines whether the position, outputted by the position output section 33B, of the pixel section 33A, i.e., the position of the pixel section 33A in which the event generating section 33Ac has generated a positive event, is located on any of a plurality of reflection trajectories (step S14, position determination step). In a case where the position of the pixel section 33A in which the event generating section 33Ac has generated the event is not located on any of the plurality of reflection trajectories ("NO" in step S4), the process returns to step S11.

Otherwise, in a case where the position of the pixel section 33A in which the event generating section 33Ac has generated the event is located on any of the plurality of reflection trajectories ("YES" in step S14), the control section 34 stores the position of the pixel section 33A concerned (step S15).

Next, when the irradiation with light by the light-emitting element is ended (step S16), in each of the pixel sections 33A, the threshold value determining section 33Ab determines whether the amount of light received of the light-receiving element 33Aa is smaller than the second threshold value (step S17). In a case where the amount of light received is not smaller than the second threshold value ("NO" in step S17), the process returns to step S11.

Otherwise, in a case where the amount of light received is smaller than the second threshold value ("YES" in step in S17), the event generating section 33Ac generates a negative event in the pixel section 33A that includes the light-receiving element 33Aa concerned (step S18, event generation step). When the event generating section 33Ac generates the negative event, the position output section 33B outputs, to the control section 34, the position of the pixel section 33A in which the negative event has been generated.

Next, the same-pixel-event determining section 34A determines whether the position, outputted by the position output section 33B, of the pixel section 33A in which the negative event has been generated is the same as the position, stored in step S15, of the pixel section 33A in which the positive event has been generated (step S19). In a case where the position, outputted by the position output section 33B, of the pixel section 33A in which the negative event has been generated differs from the position, stored in step S15, of the pixel section 33A in which the positive event has been generated ("NO" in step S19), the process returns to step S11.

Otherwise, in a case where the position, outputted by the position output section 33B, of the pixel section 33A in which the negative event has been generated is the same as the position, stored in step S15, of the pixel section 33A in which the positive event has been generated ("YES" in step S19), the distance deriving section 34C uses the position, outputted by the position determining section 34B, of the pixel section 33A located on any one reflection trajectory, to derive a distance to the measurement target (step S20, distance derivation step).

With the above distance calculation method in which both a positive event and a negative event are used, it is possible to determine whether an amount of light received is greater than the first threshold value before being smaller than the second threshold value in the same pixel section 33A. This makes it possible to confirm that the amount of light received of the pixel section 33A concerned is greater than the first threshold value due to irradiation with an irradiation beam and makes it possible to accurately recognize the position of the pixel section 33A in which an event has been generated due to the irradiation with the irradiation beam. It is also possible to reduce the amount of processing because the processing is performed only when a negative event is generated due to stop of the irradiation with the irradiation beam.

### Embodiment 2

The following description will discuss Embodiment 2 of the present disclosure. For the convenience of description, a member having the same function as the member described in Embodiment 1 is assigned with the same reference sign, and the description thereof is omitted.

Described in Embodiment 1 is an aspect in which the detecting device 30 is applied to an automatic door system, whereas in Embodiment 2, an aspect in which the detecting device 30 is applied to a shutter opening-closing system (opening-closing system) will be described.

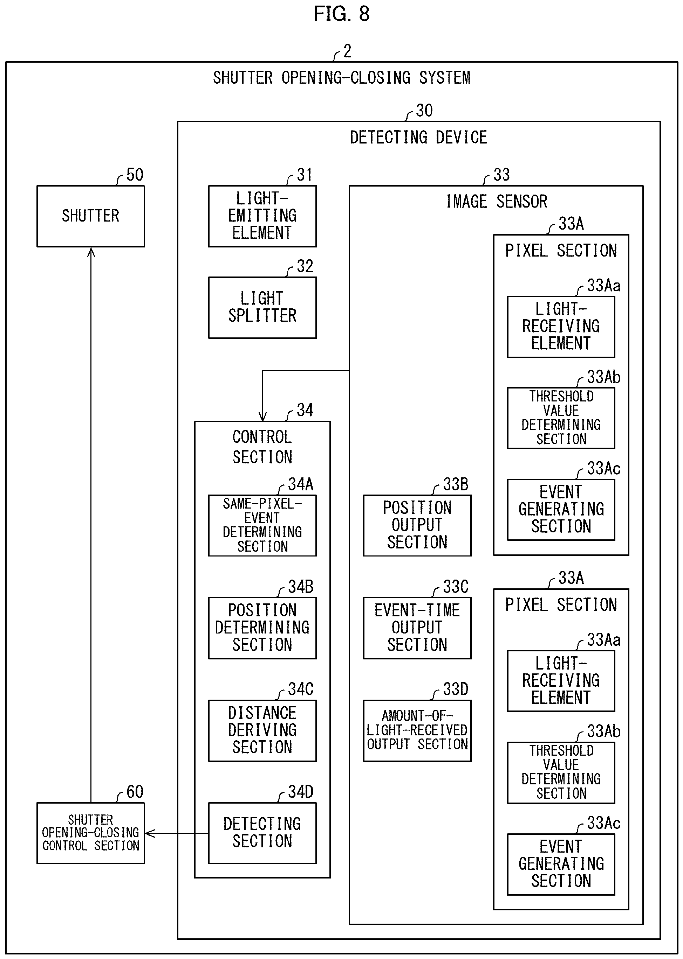

Fig. 8 is a block diagram of a main configuration of a shutter opening-closing system 2 of Embodiment 2. As illustrated in Fig. 8, the shutter opening-closing system 2 includes: a shutter 50; and a shutter opening-closing control section 60, instead of the automatic door 10 and the door opening-closing control section 40 of Embodiment 1.

The shutter opening-closing control section 60 controls the opening-closing motion of the shutter 50 according to the result of detection, by the detecting section 34D, of a passerby present near the shutter 50. For example, in a case of receiving, from the detecting section 34D, the result of detection indicating that a passerby or a passing-by object is present near the shutter 50, the shutter opening-closing control section 60 may cause the shutter 50 to make an opening motion.

Like the automatic door system 1 in Embodiment 1, also in the shutter opening-closing system 2 in Embodiment 2, the opening-closing motion of the shutter 50 is controlled according to the result of the detection by the detecting device 30. It is therefore possible to perform a fewer amount of processing in order to measure the distance from a passerby or a passing-by object to the shutter 50 in the shutter opening-closing system 2 than in conventional shutter opening-closing systems.

Discussed in the above descriptions of Embodiment 1 and Embodiment 2 is an aspect in which the detecting device 30 is applied to an automatic door system or a shutter opening-closing system. However, the detecting device 30 is applicable to other door opening-closing systems including, for example, a gate opening-closing system for controlling the opening-closing of a gate.

### Configuration example in which reflection trajectories do not overlap each other

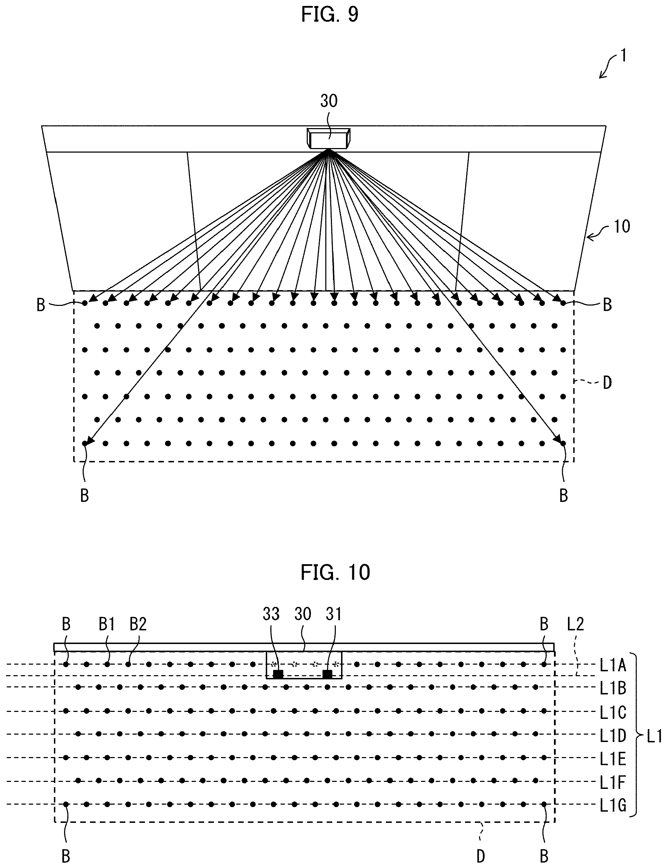

The following description will discuss a configuration example in which the reflection trajectories do not overlap each other, with reference to Figs. 9 to 13. First, irradiation beams applied by the detecting device 30 will be described, with reference to Fig. 9. Fig. 9 is a diagram of an example of a light-emission pattern of irradiation beams with which a detecting region D is irradiated. As described above, light applied by the light-emitting element 31 of the detecting device 30 is split by the light splitter 32. The detecting region D is irradiated with the light having been split into a plurality of irradiation beams, as illustrated in Fig. 9. Dots B illustrated in Fig. 9 indicate positions where respective irradiation beams are applied in the detecting region D. The dots B can therefore be positions of the respective irradiation beams in the detecting region D. In the example illustrated in Fig. 9, the dots B are arranged in the detecting region D such that a set of dots B is spaced at predetermined intervals in a direction parallel to the automatic door 10 and such a set of dots B, spaced at the predetermined intervals in parallel with the automatic door 10, is disposed also away from the automatic door 10. This arrangement is an example of the light-emission pattern of the irradiation beams.

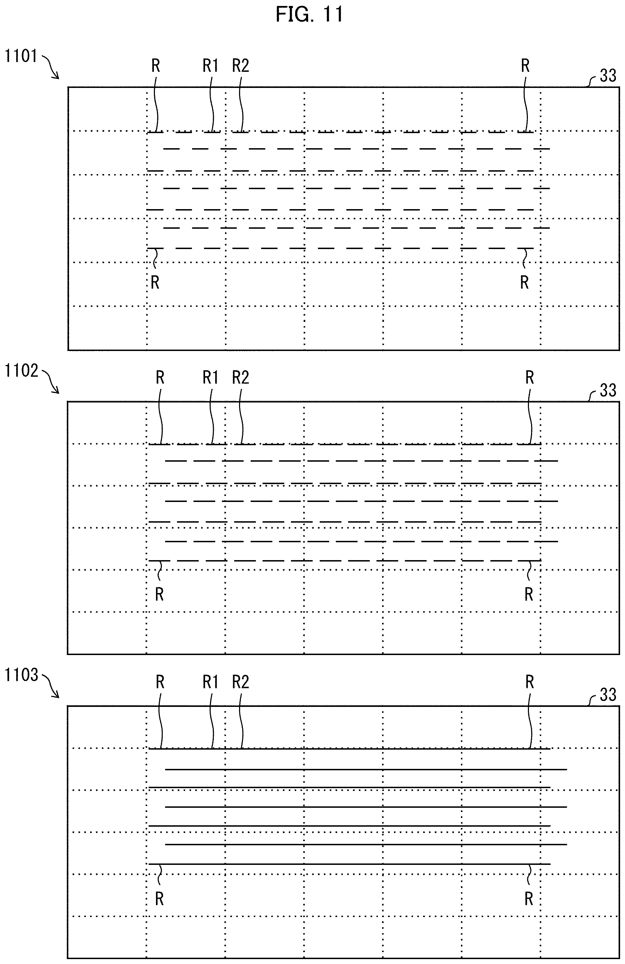

Next, an example in which the reflection trajectories overlap each other will be described with reference to Figs. 10 and 11. Fig. 10 is a diagram of a light-emission pattern seen when the detecting device 30 and the detecting region D are viewed from above the automatic door system 1. As illustrated in Fig. 10, a straight line connecting, in the direction parallel to the automatic door 10, the dots B in the detecting region D is a first straight line L1, and a straight line connecting the light-emitting element 31 and the image sensor 33 is a second straight line L2. In other words, the dots B indicating the positions of the irradiation beams are arranged on the first straight line L1. The light-emitting element 31 and the image sensor 33 are arranged on the second straight line L2. In the example illustrated in Fig. 10, there are seven first straight lines L1, namely, a first straight line L1A to a first straight line L1G. Herein, the first straight line L1A to first straight line L1G are collectively referred to as the first straight line L1.

Fig. 11 is a diagram of the reflection trajectories of the respective irradiation beams applied in the light-emission pattern illustrated in Fig. 10. Illustrated in Fig. 11 by way of example are reflection trajectories obtained by changing a distance to a physical object in the range of 0.5 m to 4 m. In Fig. 11, reflection trajectories R corresponding to the respective dots B in Fig. 10 are illustrated.

In Fig. 11, a diagram 1101 illustrates the reflection trajectories R observed in a case where the distance to the physical object is changed in the range of 2 m to 4 m. A diagram 1102 illustrates the reflection trajectories R observed in a case where the distance to the physical object is changed in the range of 1.5 m to 4 m. A diagram 1103 illustrates the reflection trajectories R observed in a case where the distance to the physical object is changed in the range of 0.5 m to 4 m.

As illustrated in the diagram 1101 of Fig. 11, in a case where the distance to the physical object is in the range of 2 m to 4 m, the reflection trajectories R do not overlap each other. In this case, it is therefore possible to accurately derive the distance to the physical object. As illustrated in the diagram 1102 of Fig. 11, even in a case where the distance to the physical object is in the range of 1.5 m to 4 m, the reflection trajectories R do not overlap each other. Also in this case, it is possible to derive the distance to the physical object. However, as illustrated in the diagram 1103 of Fig. 11, in a case where the distance to the physical object is in the range of 0.5 m to 4 m, the reflection trajectories R overlap each other. In this case, it is not possible to accurately derive the distance to the physical object.

For example, the extending direction of a line segment of a reflection trajectory R1 (Fig. 11) corresponding to an irradiation beam of a dot B1 (Fig. 10) is the same as the extending direction of a line segment of a reflection trajectory R2 (Fig. 11) corresponding to an irradiation beam of a dot B2 (Fig. 10). This makes it impossible to distinguish between the reflection trajectory R1 and the reflection trajectory R2 in the example illustrated in the diagram 1103 of Fig. 11.

It is therefore understood that in a case where the first straight line L1 indicating the light-emission pattern of the irradiation beams is parallel to the second straight line L2 indicating a positional relationship between the light-emitting element 31 and the image sensor 33, as illustrated in Fig. 10, the reflection trajectories R overlap each other and it is impossible to accurately derive the distance to the physical object. Note that for the same amount of movement distance, the reflection trajectory is shorter when the physical object is farther, and the reflection trajectory is longer when the physical object is closer. The reflection trajectories R are therefore more likely to overlap each other in a case where a distance to a physical object that is closer to the detecting device 30 is needed to be derived.

In order for the above problem to be solved, the inventors of the present application found out that it is possible to prevent the reflection trajectories from overlapping each other by devising the positional relationship between the light-emitting element 31 and the image sensor 33 and the positional relationship of the light-emission pattern of the irradiation beams. The following description will discuss the configuration found out by the inventors of the present application.

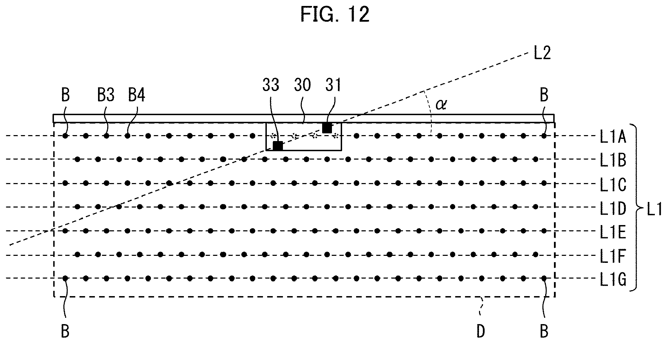

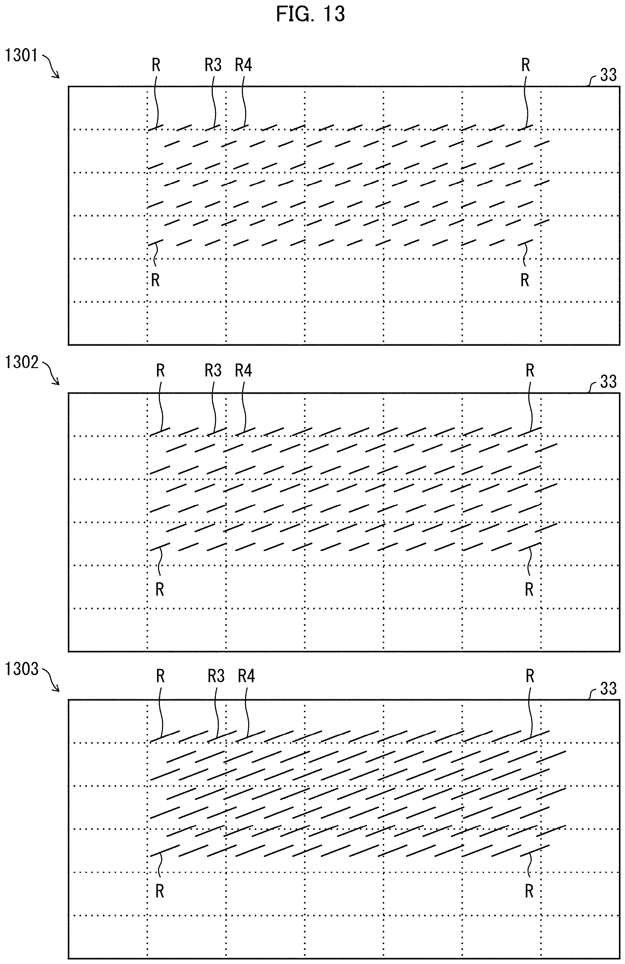

The following description will discuss the positional relationship between the light-emitting element 31 and the image sensor 33 and the positional relationship of the light-emission pattern of the irradiation beams that have been found out by the inventors of the present application, with reference to Figs. 12 and 13. Fig. 12 is a diagram of a light-emission pattern seen when the detecting device 30 and the detecting region D are viewed from above the automatic door system 1. As illustrated in Fig. 12, in this configuration example, the first straight line L1 connecting, in the direction parallel to the automatic door 10, the dots B in the detecting region D and the second straight line L2 connecting the light-emitting element 31 and the image sensor 33 are not parallel to each other but form an angle of α. Reflection trajectories in this configuration example are illustrated in Fig. 13.

Illustrated in Fig. 13 by way of example are reflection trajectories R obtained by, in the same way as in Fig. 11, changing a distance to a physical object in the range of 0.5 m to 4 m. In Fig. 13, a diagram 1301 illustrates the reflection trajectories R observed in a case where the distance to the physical object is changed in the range of 2 m to 4 m. A diagram 1302 illustrates the reflection trajectories R observed in a case where the distance to the physical object is changed in the range of 1.5 m to 4 m. A diagram 1303 illustrates the reflection trajectories R observed in a case where the distance to the physical object is changed in the range of 0.5 m to 4 m.

Unlike the above example illustrated in Fig. 11, the reflection trajectories R do not overlap each other in any of the distances to the physical object in the range of 0.5 m and 4 m, in the diagrams 1301, 1302, and 1303 in Fig. 13.

For example, the extending direction of a line segment of a reflection trajectory R3 (Fig. 13) corresponding to an irradiation beam of a dot B3 (Fig. 12) is the same as the extending direction of a line segment of a reflection trajectory R4 (Fig. 13) corresponding to an irradiation beam of a dot B4 (Fig. 12). However, the reflection trajectories R3 and R4 do not overlap each other. Also in the example illustrated in the diagram 1303 of Fig. 13, it is possible to distinguish between the reflection trajectory R3 and the reflection trajectory R4.

As is understood from the above, with this configuration, in which the first straight line L1 indicating the light-emission pattern of irradiation beams is not parallel to the second straight line L2 indicating the positional relationship between the light-emitting element 31 and the image sensor 33, the reflection trajectories R do not overlap each other, and it is therefore possible to accurately derive the distance to the physical object.

Further, the above-described angle α is preferably less than 90° and may be even less than 45°. The second straight line L2 is a straight line connecting the light-emitting element 31 and the image sensor 33. The angle α being 90° therefore means that the light-emitting element 31 and the image sensor 33 are arranged in the direction perpendicular to the first straight line L1. This arrangement makes extremely large the detecting device 30 including the light-emitting element 31 and the image sensor 33. Accordingly, with the angle α being less than 90°, and furthermore, with the angle α being less than 45°, it is possible to both prevent the detecting device 30 from being extremely large and accurately derive the distance to a physical object.

As described above, the configuration found out by the inventors of the present application is such that assuming that: the first straight line L1 is a straight line connecting the dots B, which are the positions of irradiation beams in the detecting region D, i.e., a straight line connecting the positions of the irradiation beams; and the second straight line L2 is a straight line connecting the light-emitting element 31 and the image sensor 33, the first straight line L1 and the second straight line L2 differ from each other in direction, that is to say, the first straight line L1 and the second straight line L2 are not parallel to each other.

In other words, the plurality of irradiation beams as a result of split are arranged in the plurality of first straight lines L1 parallel to each other, and the direction of the first straight lines L1 differs from the direction of the second straight line L2 connecting the light-emitting element 31 and the image sensor 33.

This configuration makes it possible to prevent the overlap between reflection trajectories for any measurement distance, whether the distance is short or long. It is therefore possible for the detecting device 30 to accurately derive a distance to a physical object, whether the distance is short or long.

Aspects of the present invention can also be expressed as follows:
A distance measuring device in accordance with a first aspect of the present invention includes: at least one light-emitting element; and an image sensor including a plurality of pixel sections each of which includes a light-receiving element and which are two-dimensionally disposed, the image sensor including a position output section configured to, in a case where an amount of light received is greater than a first threshold value in the light-receiving element included in a pixel section of the plurality of pixel sections, output a position of the pixel section in the image sensor, the distance measuring device further including: a position determining section configured to determine whether the position is located on a reflection trajectory, the reflection trajectory being a line connecting, on the image sensor, points at which a reflected beam, reflected by a physical object, of an irradiation beam from the at least one light-emitting element forms an image on the image sensor and which are obtained as a distance from the physical object is changed; and a distance deriving section configured to, in a case where the position is located on the reflection trajectory, derive, with use of a relationship between the position and the distance from the physical object, a distance to a physical object.

With the above configuration, distance derivation processing is performed only on the pixel section in which the amount of light received is greater than the first threshold value. This makes it possible to reduce the amount of processing needed for distance derivation.

Further, the distance derivation processing is performed only in a case where the light-receiving element concerned, among the light-receiving elements in which amounts of light received are greater than the first threshold value, is located on the reflection trajectory. This eliminates the need to scan the entire image sensor and therefore makes it possible to further reduce the amount of processing needed for distance derivation.

According to the distance measuring device in accordance with a second aspect of the present invention, in the first aspect, the plurality of pixel sections each include an event generating section configured to, in a case where an amount of light received is greater than the first threshold value in the light-receiving element, generate an event, and the position output section is configured to output a position, in the image sensor, of the pixel section in which the event generating section has generated the event.

According to the distance measuring device in accordance with a third aspect of the present invention, in the first or second aspect, the first threshold value and a second threshold value are set to values in proportion to a reference amount of light received, and the reference amount of light received is updated after generation of the event with an amount of light received after the generation, an amount of light received indicated by the first threshold value is greater by a first proportion of the reference amount of light received than the reference amount of light received, and an amount of light received indicated by the second threshold value is smaller by a second proportion of the reference amount of light received than the reference amount of light received, and the event generating section is configured to generate the event not only in a case where the amount of light received in the light-receiving element is greater than the first threshold value but also in a case where the amount of light received in the light-receiving element is smaller than the second threshold value.

With the above configuration, it is possible to generate an event, at the time when the reflected beam no longer forms an image and the amount of light received in the light-receiving element becomes the amount of light received before the generation of the event.

According to the distance measuring device in accordance with a fourth aspect of the present invention, in any of the first to third aspects, the event generating section is configured to generate an event that is distinguishable in terms of whether the amount of light received is greater than the first threshold value or is smaller than the second threshold value.

With the above configuration, it is possible to recognize whether the event has been generated due to a larger amount of light received or due to a smaller amount of light received.

According to the distance measuring device in accordance with a fifth aspect of the present invention, in any of the first to fourth aspects, the absolute value of the first proportion used to set the first threshold value is greater than the absolute value of the second proportion used to set the second threshold value, the distance measuring device further includes a same-pixel-event determining section configured to determine whether the amount of light received is greater than the first threshold value before being smaller than the second threshold value, in the same light-receiving element within a predetermined time, and the position determining section is configured to determine whether a position of a pixel section of the plurality of pixel sections is located on the reflection trajectory, the pixel section including the light-receiving element that is determined, by the same-pixel-event determining section, to be the same light-receiving element in which the amount of light received is greater than the first threshold value before being smaller than the second threshold value.

With the above configuration, it is possible to confirm whether the light-receiving element in which the amount of light received is greater than the first threshold value is the same as the light-receiving element in which the amount of light received is smaller than the second threshold value thereafter. This makes it possible to confirm that the amount of light received is greater than the first threshold value in the light-receiving element concerned due to irradiation with an irradiation beam and makes it possible to accurately recognize the position of the pixel section in which an event has been generated due to the irradiation with the irradiation beam. It is also possible to reduce the amount of processing because processing is performed only in a case where an event is generated due to stop of irradiation with the irradiation beam.

According to the distance measuring device in accordance with a sixth aspect of the present invention, in any of the first to fifth aspects, the image sensor includes a time output section configured to output a time at which the event generating section generated the event.

With the above configuration, it is possible to recognize the time at which the event was generated.

According to the distance measuring device in accordance with a seventh aspect of the present invention, in any of the first to sixth aspects, the image sensor includes an amount-of-light-received output section configured to output information indicating an amount of light received, at a time when the event generating section generated the event, of the light-receiving element.

With the above configuration, it is possible to recognize brightness at the time when the event was generated.

According to the distance measuring device in accordance with an eighth aspect of the present invention, in any of the first to seventh aspects, the at least one light-emitting element includes a plurality of light-emitting elements and the distance measuring device includes the plurality of light-emitting elements, the distance measuring device further includes a light splitter configured to split light applied by the at least one light-emitting element into a plurality of irradiation beams each being the irradiation beam, or the at least one light-emitting element includes a plurality of light-emitting elements and the distance measuring device includes the plurality of light-emitting elements and the distance measuring device further includes a light splitter configured to split light applied by the at least one light-emitting element into the plurality of irradiation beams.

With the above configuration, it is possible to generate a plurality of irradiation beams and thereby extend the detecting region of the distance measuring device.

According to the distance measuring device in accordance with a ninth aspect of the present invention, in any of the first to eighth aspects, a light-emission direction of the at least one light-emitting element is formed such that the reflection trajectory of any one of the plurality of irradiation beams does not overlap the reflection trajectory of any other one of the plurality of irradiation beams.

With the above configuration, it is possible to prevent mixing of a plurality of reflected beams on the image sensor, the mixing being caused by overlap between the reflection trajectories. This enables an improvement in measurement accuracy.

According to the distance measuring device in accordance with a tenth aspect of the present invention, in any of the first to ninth aspects, a light-emission direction of the at least one light-emitting element is formed such that the reflection trajectory of any one of the plurality of irradiation beams that are simultaneously applied does not overlap the reflection trajectory of any other one of the plurality of irradiation beams.

With the above configuration, it is possible to prevent mixing of a plurality of reflected beams on the image sensor, the mixing being caused by overlap between the reflection trajectories. This enables an improvement in measurement accuracy.

According to the distance measuring device in accordance with an eleventh aspect of the present invention, in any of the first to tenth aspects, a plurality of irradiation beams applied by the plurality of light-emitting elements or the plurality of irradiation beams as a result of split by the light splitter are arranged on a plurality of first straight lines parallel to each other; and the plurality of first straight lines differ in direction from a second straight line that connects the light-emitting element and the image sensor.

According to the distance measuring device in accordance with a twelfth aspect of the present invention, in any of the first to eleventh aspects, the plurality of first straight lines and the second straight line form an angle of less than 90°.

According to the distance measuring device in accordance with a thirteenth aspect of the present invention, in any of the first to twelfth aspects, the plurality of first straight lines and the second straight line form an angle of less than 45°.

An automatic door system in accordance with a fourteenth aspect of the present invention includes: the distance measuring device described in any of the first to thirteenth aspects; and an automatic door, the automatic door being opened and closed according to a result of detection of a passerby determined with use of a distance measured by the distance measuring device.

An opening-closing system in accordance with a fifteenth aspect of the present invention includes: the distance measuring device described in any of the first to thirteenth aspects; and at least one selected from the group consisting of a shutter and a gate, the at least one selected from the group consisting of a shutter and a gate being opened and closed according to a result of detection of a passerby or a passing-by object determined with use of a distance measured by the distance measuring device.

A distance measurement method in accordance with a sixteenth aspect of the present invention is a distance measurement method for measuring a distance to a measurement target, the distance measurement method being to be performed in a distance measuring device that includes a light-emitting element and an image sensor including a plurality of pixel sections each of which includes a light-receiving element and which are two-dimensionally disposed, the distance measurement method including the steps of: in a case where an amount of light received is greater than a first threshold value in the light-receiving element included in a pixel section of the plurality of pixel sections, outputting a position of the pixel section in the image sensor; determining whether the position is located on a reflection trajectory, the reflection trajectory being a line connecting, on the image sensor, points at which a reflected beam, reflected by a physical object, of an irradiation beam from the light-emitting element forms an image on the image sensor and which are obtained as a distance from the physical object is changed; and in a case where the position is located on the reflection trajectory, deriving, with use of a relationship between the position and the distance from the physical object, a distance to a physical object.

With the above configuration, distance derivation processing is performed only on the light-receiving element in which the amount of light received is greater than the first threshold value. This makes it possible to reduce the amount of processing needed for distance derivation.

Further, the distance derivation processing is performed only in a case where the light-receiving element concerned, among the light-receiving elements in which amounts of light received are greater than the first threshold value, is located on the reflection trajectory. This eliminates the need to scan the entire image sensor and therefore makes it possible to further reduce the amount of processing needed for distance derivation.

The present disclosure is not limited to the above embodiments, but can be altered by a skilled person in the art within the scope of the claims. An embodiment derived from a proper combination of technical means disclosed in differing embodiments is also encompassed in the technical scope of the present invention.

### Reference Signs List

1: Automatic door system
2: Shutter opening-closing system
10: Automatic door
30: Detecting device (distance measuring device)
31: Light-emitting element
32: Light splitter
33: Image sensor
33A: Pixel section
33Aa: Light-receiving element
33Ab: Threshold value determining section
33Ac: Event generating section
33B: Position output section
33C: Event-time output section (time output section)
33D: Amount-of-light-received output section
34: Control section
34A: Same-pixel-event determining section
34B: Position determining section
34C: Distance deriving section
34D: Detecting section
40: Door opening-closing control section
50: Shutter
60: Shutter opening-closing control section

## Claims

1. A distance measuring device comprising:
at least one light-emitting element; and
an image sensor including a plurality of pixel sections each of which includes a light-receiving element and which are two-dimensionally disposed,
the image sensor including a position output section configured to, in a case where an amount of light received is greater than a first threshold value in the light-receiving element included in a pixel section of the plurality of pixel sections, output a position of the pixel section in the image sensor,
the distance measuring device further comprising: a position determining section configured to determine whether the position is located on a reflection trajectory, the reflection trajectory being a line connecting, on the image sensor, points at which a reflected beam, reflected by a physical object, of an irradiation beam from the at least one light-emitting element forms an image on the image sensor and which are obtained as a distance from the physical object is changed; and
a distance deriving section configured to, in a case where the position is located on the reflection trajectory, derive, with use of a relationship between the position and the distance from the physical object, a distance to a physical object.

2. The distance measuring device according to claim 1, wherein:
the plurality of pixel sections each include an event generating section configured to, in a case where an amount of light received is greater than the first threshold value in the light-receiving element, generate an event; and
the position output section is configured to output a position, in the image sensor, of the pixel section in which the event generating section has generated the event.

3. The distance measuring device according to claim 2, wherein:
the first threshold value and a second threshold value are set to values in proportion to a reference amount of light received, and the reference amount of light received is updated after generation of the event with an amount of light received after the generation;
an amount of light received indicated by the first threshold value is greater by a first proportion of the reference amount of light received than the reference amount of light received, and an amount of light received indicated by the second threshold value is smaller by a second proportion of the reference amount of light received than the reference amount of light received; and
the event generating section is configured to generate the event not only in a case where the amount of light received in the light-receiving element is greater than the first threshold value but also in a case where the amount of light received in the light-receiving element is smaller than the second threshold value.

4. The distance measuring device according to claim 3, wherein
the event generating section is configured to generate an event that is distinguishable in terms of whether the amount of light received is greater than the first threshold value or is smaller than the second threshold value.

5. The distance measuring device according to claim 4, wherein:
the absolute value of the first proportion used to set the first threshold value is greater than the absolute value of the second proportion used to set the second threshold value;
the distance measuring device further comprises a same-pixel-event determining section configured to determine whether the amount of light received is greater than the first threshold value before being smaller than the second threshold value, in the same light-receiving element within a predetermined time; and
the position determining section is configured to determine whether a position of a pixel section of the plurality of pixel sections is located on the reflection trajectory, the pixel section including the light-receiving element that is determined, by the same-pixel-event determining section, to be the same light-receiving element in which the amount of light received is greater than the first threshold value before being smaller than the second threshold value.

6. The distance measuring device according to any one of claims 2 to 5, wherein
the image sensor includes a time output section configured to output a time at which the event generating section generated the event.

7. The distance measuring device according to any one of claims 2 to 6, wherein
the image sensor includes an amount-of-light-received output section configured to output information indicating an amount of light received, at a time when the event generating section generated the event, of the light-receiving element.

8. The distance measuring device according to any one of claims 1 to 7, wherein
the at least one light-emitting element includes a plurality of light-emitting elements and the distance measuring device comprises the plurality of light-emitting elements,
the distance measuring device further comprises a light splitter configured to split light applied by the at least one light-emitting element into a plurality of irradiation beams each being the irradiation beam, or
the at least one light-emitting element includes a plurality of light-emitting elements and the distance measuring device comprises the plurality of light-emitting elements, and the distance measuring device further comprises a light splitter configured to split light applied by the at least one light-emitting element into the plurality of irradiation beams.

9. The distance measuring device according to claim 8, wherein
a light-emission direction of the at least one light-emitting element is formed such that the reflection trajectory of any one of the plurality of irradiation beams does not overlap the reflection trajectory of any other one of the plurality of irradiation beams.

10. The distance measuring device according to claim 8, wherein
a light-emission direction of the at least one light-emitting element is formed such that the reflection trajectory of any one of the plurality of irradiation beams that are simultaneously applied does not overlap the reflection trajectory of any other one of the plurality of irradiation beams.

11. The distance measuring device according to claim 8, wherein:
a plurality of irradiation beams applied by the plurality of light-emitting elements or the plurality of irradiation beams as a result of split by the light splitter are arranged on a plurality of first straight lines parallel to each other; and
the plurality of first straight lines differ in direction from a second straight line that connects the light-emitting element and the image sensor.

12. The distance measuring device according to claim 11, wherein
the plurality of first straight lines and the second straight line form an angle of less than 90°.

13. The distance measuring device according to claim 12, wherein
the plurality of first straight lines and the second straight line form an angle of less than 45°.

14. An automatic door system comprising:
the distance measuring device according to any one of claims 1 to 13; and
an automatic door,
the automatic door being opened and closed according to a result of detection of a passerby determined with use of a distance measured by the distance measuring device.

15. An opening-closing system comprising:
the distance measuring device according to any one of claims 1 to 13; and
at least one selected from the group consisting of a shutter and a gate,
the at least one selected from the group consisting of a shutter and a gate being opened and closed according to a result of detection of a passerby or a passing-by object determined with use of a distance measured by the distance measuring device.

16. A distance measurement method for measuring a distance to a measurement target, the distance measurement method being to be performed in a distance measuring device that includes a light-emitting element and an image sensor including a plurality of pixel sections each of which includes a light-receiving element and which are two-dimensionally disposed, the distance measurement method comprising the steps of:
in a case where an amount of light received is greater than a first threshold value in the light-receiving element included in a pixel section of the plurality of pixel sections, outputting a position of the pixel section in the image sensor;
determining whether the position is located on a reflection trajectory, the reflection trajectory being a line connecting, on the image sensor, points at which a reflected beam, reflected by a physical object, of an irradiation beam from the light-emitting element forms an image on the image sensor and which are obtained as a distance from the physical object is changed; and
in a case where the position is located on the reflection trajectory, deriving, with use of a relationship between the position and the distance from the physical object, the distance to the measurement target.
